# EUROPEAN PATENT SPECIFICATION

(11) **EP 1 556 620 B1**
(45) Date of publication and mention of the grant of the patent: **10.01.2007**
(21) Application number: 03754344.4
(22) Date of filing: 22.10.2003
(51) Int. Cl.: F16B 2/18, E05C 19/14

(54) **A LOCKING MEANS FOR AN OVER-CENTRE FASTENER**
VERRIEGELUNGSMITTEL FÜR EINEN SPANNVERSCHLUSS
MOYEN DE VERROUILLAGE POUR ATTACHE D'ARC-BOUTEMENT

(30) Priority: 30.10.2002 SE 0203195
(43) Date of publication of application: 27.07.2005
(73) Proprietor: Eriksson, Lars, S-635 05 Eskilstuna (SE)
(72) Inventor: Eriksson, Lars, S-635 05 Eskilstuna (SE)
(74) Representative: Säfwenberg, Björn
(86) International application number: PCT/SE2003/001640
(87) International publication number: WO 2004/040148

(56) References cited:
- EP-A1- 1 179 393

## Description

The present invention concerns a locking means for an over-centre fastener according to the preamble of claim 1.

Over-centre fasteners (also denominated toggle fasteners or latches) are commonly used for securing - and often clamping - two objects together, such as keeping a lid in a closed position on a box or case. A first part of the fastener, referred to as a striker and often having a hook-like shape, is attached to one of the objects. A base member of the other part of the fastener is attached to the other object.

An inherent feature of over-centre fasteners is the self-locking property when closed and under load. At occasions, it may occur that the load is permanently or temporarily decreased, such as due to vibration or shock, and in such cases the operating lever of the fastener may be set in motion to an extent that it passes the dead point of the over-centre mechanism. The consequence is not only that the clamping force of the fastener is lost, but may even involve damage or injury.

EP 1 179 393 A1 discloses a large-scale clamp mechanism mechanically resembling an over-centre fastener, but not having the self-locking property thereof. Thus, in order to hold the clamp mechanism in a closed position, its operating handle carries a spring loaded lock member engaging a latch extending from a stationary base member. The lock member is released from its engagement with the latch by manually depressing it against the spring force, thereby enabling raising of the handle and release of the clamp mechanism.

Although useful also for locking a true over-centre fastener, this prior art device has the apparent drawback that, applied to a normal-sized over-centre fastener, its lock member would be cumbersome and obstructive to the easiness of operating the fastener, since it extends substantially perpendicularly downwards from a mid-portion of the handle.

The present invention has as its object to provide a manually releasable spring loaded locking means that sets aside the aforementioned drawback.

Thus, there is provided a locking means for an over-centre fastener for preventing unintentional opening of the fastener, including manually releasable spring-action retaining means acting between a movable lever and a stationary part of the fastener. The spring action retaining means comprise a spring attached to the lever, and an abutment means is associated with the stationary part. The spring has one end attached to the lever and an opposite, movable end thereof forming engagement means is adapted to engage the abutment means in a closed position of the fastener, said opposite end of the spring being formed with guide means guiding movement of said opposite end of the spring relative to the lever.

Embodiments of the present invention will now be described, reference being made to the accompanying drawings, wherein:
- Fig. 1: is a side view of an over-centre fastener according to a preferred embodiment of the present invention shown in a open position;
- Fig. 2: is a plan view of the fastener of Fig. 1;
- Fig. 3: is a side view of the fastener according to Figs. 1 and 2 in a closed position;
- Fig. 4: is a plan view of the fastener as shown in Fig. 3;
- Fig. 5: is a section at an enlarged scale taken along line V-V in Fig. 4;
- Fig. 6: is a section at an enlarged scale taken along line VI-VI in Fig. 2;
- Fig. 7: is a side view of a leaf spring used in the embodiment of Figs. 1 - 6 shown in the scale of Figs. 5 and 6;
- Fig. 8: is a side view of an over-centre fastener having a wire spring as a retaining means and being shown in a closed position;
- Fig. 9: is a plan view of the fastener of Fig. 8;
- Fig. 10: is a plan view of the fastener of Figs. 8 and 9 showing the wire spring in its released position; and
- Fig. 11: is a section taken along line XI-XI in Fig. 9.

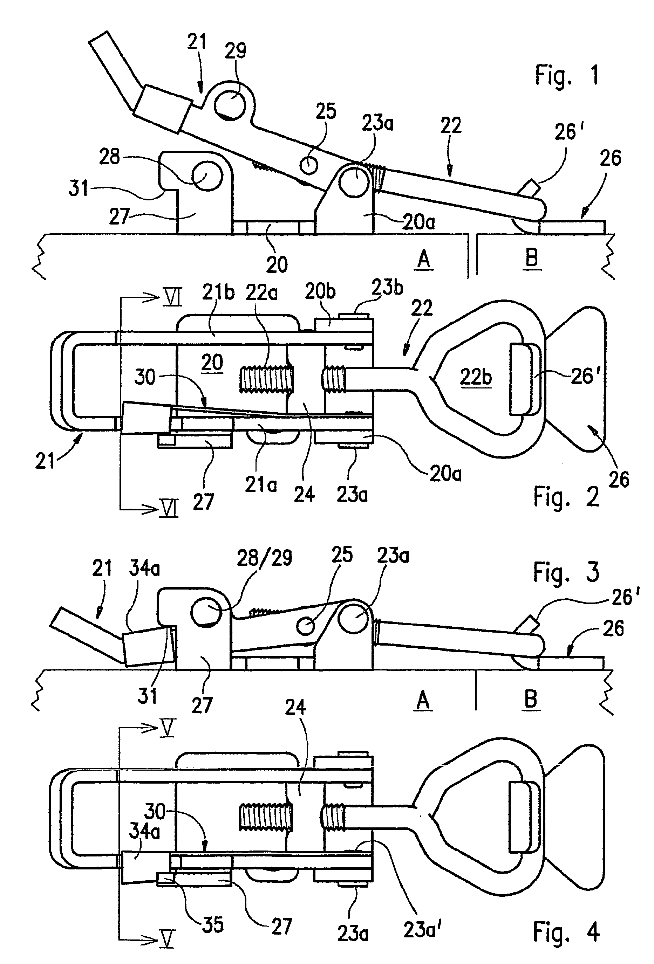

The over-centre fasteners according to the present invention are based on a conventional fastener. Such fastener will be described with reference to Figs. 1 - 4. It comprises a base plate 20 to be fixed to one object A to be clamped to another object B, a lever 21 and an engagement member 22. The lever 21 is swingable about rivets 23a, 23b engaged in spaced brackets 20a, 20b protruding from the base plate 20. A first end 22a of the engagement member 22 is threaded and engages internal threads of a cylindrical body 24 which is linked to the lever 21 at a distance from the rivets 23a, 23b. More precisely, the cylindrical body 24 is carried between spaced legs 21a, 21b of the lever 21 so as to be rotational about stub shafts 25 engaged in the spaced legs. A free end of the engagement member 22 is formed with an eye 22b for engagement with a hook-like end 26' of a striker 26 attached to object B. Often, there is a further bracket 27 integral with the base plate and having a hole 28 which is aligned with a hole 29 in the lever 21 in its closed state for the purpose of locking the lever to the base plate by means of a padlock.

Apart from such positive locking, in a conventional over-centre fastener being in its closed state according to Fig. 3 and being under clamping tension, substantially only the force from the engaging member directed into the rotational centre of the cylindrical body 24 prevents the lever 21 from passing over the dead point and releasing the clamping force.

To prevent this, the present invention provides a manually releasable snap-lock mechanism arranged between the stationary base plate 20 and the lever 21.

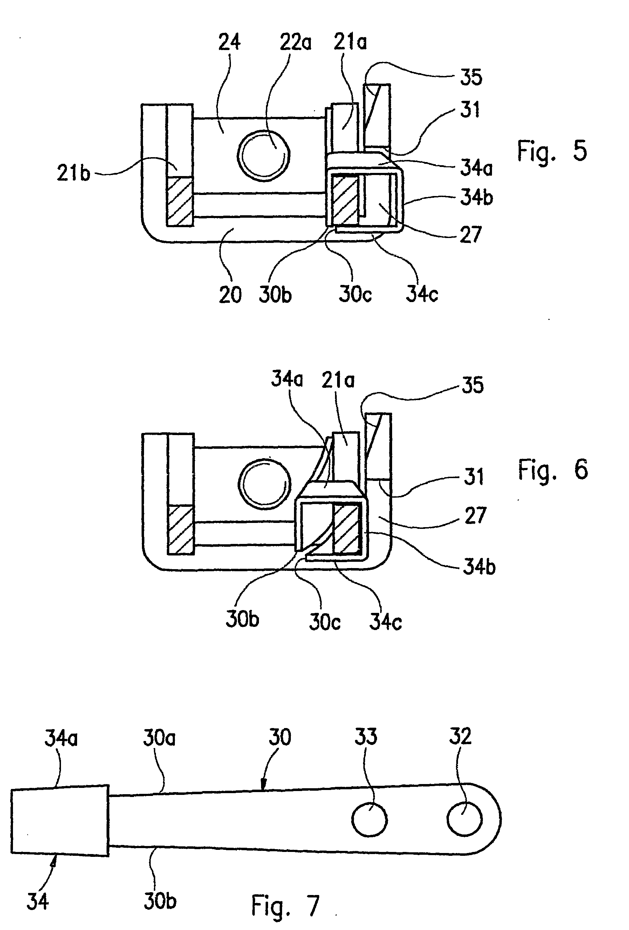

A first, preferred embodiment of such mechanism is shown in Figs. 1 - 7. It includes a leaf spring 30, carried by the lever 21 and being separately shown in Fig. 7, and an engagement surface 31 associated with the base plate 20, in this case formed on the bracket 27.

The leaf spring 30 is elongate and its main plane extends in its normal, unstrained state along the inner side of leg 21a. It has a hole 32 at one of its ends and a further hole 33 at a distance therefrom. This end of the spring is fixed to the leg 21a by being clamped between the inner end of the leg and, on one hand, the clinched inner end 23a' of rivet 23a extending through hole 32, and, on the other hand, the cylindrical body 24, the stub shaft 25 of which extends through the hole 33.

The free end of the leaf spring carries along its upper edge 30a an integral flap 34. A substantially horizontal portion 34a thereof extends at substantially 90° from the main plane of the spring so as to extend above and beyond the leg 21a of the lever 21 (Figs. 4 and 5) a distance substantially equal to or somewhat greater that the width of the leg 21a. The free end of the horizontal portion 34a is bent down to form a substantially vertical portion 34b, and its free end is further inwardly bent to form a lower, substantially horizontal portion 30c extending below the leg 21a. As will be seen in Fig. 5, the free edge 30c of the lower horizontal portion 34c leaves a small space to the lower edge 30b of the leaf spring that is less than the width of the leg 21a.

In the closed position of the lever 21 shown in Figs. 3 - 5, the upper horizontal portion 34a is located underneath the engagement surface 31 of the bracket 27 and prevents upward movement of the lever as seen particularly in Figs. 3 - 5.

To release the lever, the flap 34 is pressed to the left in Fig. 5 so as to resiliently move its horizontal portion 34a from its position underneath the engagement surface 31. In the position of the flap 34 shown in Fig. 6, in which its substantially vertical portion 34b abuts the exterior side of leg 21a, the lever is released and is free to be opened, whereupon the leaf spring may regain its unloaded position along the leg 21a. When again closed, a bevelled cam surface 35 of the bracket 27 engages the lower horizontal portion 34c and forces the leaf spring to deflect inwardly until the upper horizontal portion 34a has reached a position just before that of Fig. 6 and is free to regain its unstrained locking position. The movements of the leaf spring are guided by the upper and lower horizontal portion 34a, 34c sliding against the upper and lower surfaces, respectively, of leg 21a.

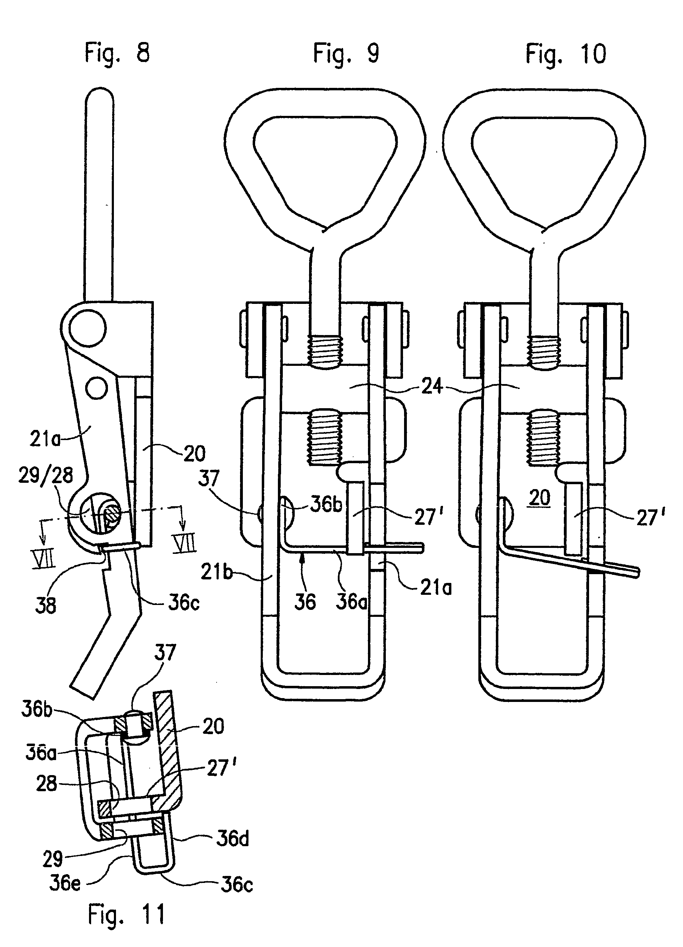

In a second embodiment of the present invention shown in Figs. 8 - 11 a wire spring 36 is used as a retaining means. One end of a straight main portion 36a of the spring is bent at 90° and an eye 36b is formed at the free end thereof. A rivet 37 attaches the spring to the leg 21b of the lever 21. The straight main portion 36a of the spring extends perpendicularly from the leg 21b and passes beyond the leg 21a. The free end of the spring is bent to form a U-shaped, manually releasable catch 36c straddling the leg 21a. In the closed position of the lever 21 shown in Figs. 8, 9 and 11, an upper leg 36e of the catch engages a notch 38 in the bracket 27' in this embodiment being located between the legs 21a, 21b of the lever 21. To release the lever, the catch is pressed downwardly in Figs. 9 and 10. Movement of the catch is guided by its two opposed legs 36d, 36e straddling the leg 21a of the lever.

## Claims

1. A locking means for an over-centre fastener for preventing unintentional opening of the fastener, including manually releasable snap-action retaining means (30, 34; 36) between a movable lever (21) and a stationary part (20, 27) of the fastener, said retaining means comprising a spring (30; 36) attached to the lever (21a; 21b) and abutment means (31; 38) associated with the stationary part (20, 27),
**characterized in that** the spring (30) has one end attached to the lever (21a) and an opposite, movable end thereof forming engagement means (34a; 36a) adapted to engage the abutment means (31; 38) in a closed position of the fastener, said opposite end of the spring being formed with guide means (34a, 34c; 36d, 36e) guiding movement of said opposite end of the spring relative to the lever (21a).

2. The locking means according to claim 1,
**characterized in that** the spring is a leaf spring (30).

3. The locking means according to claim 1,
**characterized in that** the spring is a wire spring (36) .

4. The locking means according to claim 2 or 3,
**characterized in that** said guide means comprise at least one portion (34a, 34c; 36, 36d) of said spring (30; 36) bent to encompass a portion of said lever.

## Patentansprüche

1. Verriegelungsmittel für eine Übertotpunkt-Befestigungseinrichtung zum Verhindern eines unbeabsichtigten Öffnens der Befestigungseinrichtung mit manuell lösbarem Rückhaltemittel (30, 34; 36) mit Schnappwirkung zwischen einem beweglichen Hebel (21) und einem stationären Teil (20, 27) der Befestigungseinrichtung, wobei die Rückhaltemittel eine Feder (30; 36) aufweisen, die an dem Hebel (21a; 21b) angebracht ist, und Anschlagmittel (31; 38), die dem stationären Teil (20, 27) zugeordnet sind,
**dadurch gekennzeichnet, daß** ein Ende der Feder (30) an dem Hebel (21a) angebracht ist und ein entgegengesetztes, bewegliches Ende desselben Eingriffsmittel (34a; 36a) bildet, die zum Eingriff in die Anschlagmittel (31; 38) in einer geschlossenen Position der Befestigungseinrichtung ausgebildet sind, wobei das entgegengesetzte Ende der Feder mit Führungsmitteln (34a, 34c; 36d, 36e) ausgestattet ist, die eine Bewegung des entgegengesetzten Endes der Feder relativ zu dem Hebel (21a) führen.

2. Verriegelungsmittel nach Anspruch 1,
**dadurch gekennzeichnet, daß** die Feder eine Blattfeder (30) ist.

3. Verriegelungsmittel nach Anspruch 1,
**dadurch gekennzeichnet, daß** die Feder eine Drahtfeder (36) ist.

4. Verriegelungsmittel nach Anspruch 2 oder 3,
**dadurch gekennzeichnet, daß** das Führungsmittel mindestens einen Abschnitt (34a, 34c; 36, 36d) der Feder (30; 36) aufweist, welches gebogen ist, zum Umgreifen eines Abschnittes des Hebels.

## Revendications

1. Moyen de verrouillage pour un élément de fixation à détente brusque destiné à empêcher une ouverture involontaire de l'élément de fixation, comprenant un moyen de retenue d'action de détente libérable manuellement (30, 34 ; 36) entre un levier mobile (21) et une pièce fixe (20, 27) de l'élément de fixation, ledit moyen de retenue comprenant un ressort (30; 36) fixé au levier (21a ; 21b) et un moyen de butée (31; 38) associé à la partie fixe (20, 27),
**caractérisé en ce que** le ressort (30) présente une première extrémité fixée au levier (21a) et une extrémité opposée mobile de celui-ci formant un moyen d'engagement (34a ; 36a) conçu pour s'engager avec le moyen de butée (31; 38) dans une position fermée de l'élément de fixation, ladite extrémité opposée du ressort étant dotée d'un moyen de guidage (34a, 34c ; 36d, 36e) guidant le mouvement de ladite extrémité opposée du ressort par rapport au levier (21a).

2. Moyen de verrouillage selon la revendication 1,
**caractérisé en ce que** le ressort est un ressort à lames (30).

3. Moyen de verrouillage selon la revendication 1,
**caractérisé en ce que** le ressort est un ressort en fils (36).

4. Moyen de verrouillage selon la revendication 2 ou 3,
**caractérisé en ce que** ledit moyen de guidage comprend au moins une partie (34a, 34c ; 36, 36d) dudit ressort (30 ; 36) courbée pour entourer une partie dudit levier.
